# EUROPÄISCHE PATENTSCHRIFT

(11) **EP 2 132 859 B1**
(45) Veröffentlichungstag und Bekanntmachung des Hinweises auf die Patenterteilung: **27.02.2013**
(21) Anmeldenummer: 08717937.0
(22) Anmeldetag: 18.03.2008
(51) Int. Cl.: H02K 3/51

(54) **ROTOR EINER ELEKTRISCHEN MASCHINE**
ROTOR OF AN ELECTRIC MACHINE
ROTOR D'UNE MACHINE ÉLECTRIQUE

(30) Priorität: 30.03.2007 DE 102007015797; 08.11.2007 DE 102007000668
(43) Veröffentlichungstag der Anmeldung: 16.12.2009
(73) Patentinhaber: Alstom Technology Ltd, 5400 Baden (CH)
(72) Erfinder: SCHWERY, Alexander, CH-5024 Küttingen (CH); SCHMID, Matthias, CH-5106 Veltheim (CH); SCHWANDA, Josef, CH-5242 Lupfig (CH); BINDER, Susanne, CH-5430 Wettingen (CH)
(86) Internationale Anmeldenummer: PCT/EP2008/053204
(87) Internationale Veröffentlichungsnummer: WO 2008/119661

(56) Entgegenhaltungen:
- EP-A- 0 736 953
- GB-A- 191 014 680

## Beschreibung

### TECHNISCHES GEBIET

Die vorliegende Erfindung bezieht sich auf das Gebiet der elektrischen Maschinen. Sie betrifft einen Rotor einer elektrischen Maschine, insbesondere eines Hydrogenerators, gemäss dem Oberbegriff des Anspruchs 1.

### STAND DER TECHNIK

Durch die veränderten marktwirtschaftlichen Bedingungen-an den geöffneten Strommärkten und den verbesserten Technologien im Bereich der Leistungselektronik hat das Thema drehzahlvariabler Antriebe zur Energieproduktion an Bedeutung gewonnen. Für diesen Zweck werden insbesondere bei Leistungen über 60 MVA bevorzugt doppelt gespeiste Asynchronmaschinen eingesetzt.

Der Stator dieses Maschinentypus unterscheidet sich nicht von den für diese Anwendung gebräuchlichen Schenkelpolsynchronmaschinen. Maschinen dieses Typs zeichnen sich dadurch aus, dass sie sowohl auf dem Stator wie auch auf dem Rotor mit einer Dreiphasenwicklung ausgestattet sind. Üblicherweise sind dabei die Wickelköpfe der Rotorwicklung auf einer zylindrischen Oberfläche angeordnet (siehe z.B. die DE-A1-195 13 457).

Durch die Zentrifugalkraft haben die Wicklungsstäbe im Betrieb die Tendenz, sich vom Zentrum weg radial nach aussen zu bewegen. Die Schwierigkeit bei der genannten Ausführung der Wickelköpfe besteht darin, die Stäbe der Wicklung gegen Verformung durch mechanische Kräfte genügend zu schützen. Dazu stehen im Allgemeinen drei Lösungen zur Verfügung:
● Bei kleineren Maschinen wird der gesamte Wickelkopf mit mehreren Lagen aus Stahldraht umwickelt. Dies ist bei grösseren Durchmessern aus herstellungstechnischen Gründen nicht sinnvoll.
● Bei Maschinen mit Durchmessern grösser als 2 Meter werden die Wickelköpfe entweder durch radiale Bolzen oder Gewindestangen mit einer Halterung auf der axialen Verlängerung des Rotorjochs befestigt, wie dies in der oben genannten Druckschrift beschrieben ist, oder
● der gesamte Wickelkopf wird von einem aufgeschrumpften Stahlzylinder umgeben, wie dies bei Vollpolsynchronmaschinen bekannt ist.

Die o.gen. Druckschrift konzentriert sich vor allem auf die Beschreibung der Gesamtkonstruktion mit dem zugehörigen Wickelkopfabstützungssystem. Die dabei verwendeten Bolzen dienen der radialen Abstützung der Rotorwickelköpfe und werden im axial hochgezogenen Rotorjoch verankert (siehe Fig. 4 und 5 der Druckschrift mit den Bolzen 37). Die Bolzen sind Gewindestangen, die einerseits im Rotorjoch verschraubt sind (36) und andererseits auf der Luftspaltseite mittels rechteckigen Einzelelementen und Muttern die anfallenden Fliehkräfte aufnehmen. Der Nachteil des beschriebenen Systems liegt in der grossen Anzahl von Einzelteilen und dem damit verbundenen Risiko der Zerstörung der Maschine bei Verlust eines Bolzens oder einer Mutter.

Die im Folgenden beschriebene Entwicklung geht näher auf die verwendeten Bolzen und insbesondere deren sichere Fixierung ein.

Die GB 14 680 und die EP 0 736 953 offenbaren einen Rotor nach dem Oberbegriff des Anspruchs 1.

### DARSTELLUNG DER ERFINDUNG

Es ist Aufgabe der Erfindung, den eingangs genannten Rotor derart weiterzuentwickeln, dass die Nachteile der bekannten Lösung vermieden werden und sich insbesondere eine sichere Fixierung der radialen Bolzen ergibt.

Die Aufgabe wird durch die Gesamtheit der Merkmale des Anspruchs 1 gelöst. Wesentlich für die Erfindung ist, dass die radialen Bolzen fest mit dem Schaft verbundene Köpfe aufweisen. Hierdurch wird einerseits die Zahl der eingesetzten Bauteile drastisch verringert. Andererseits wird die Gefahr beseitigt, dass sich aussenliegende Muttern oder Unterlegscheiben lösen und die Maschine beschädigen oder ganz zerstören können.

Gemäss einer Ausgestaltung der Erfindung sind die Köpfe der radialen Bolzen mit dem Schaft stoffschlüssig verbunden, vorzugsweise geschmiedet oder verschweisst. Hierdurch wird insbesondere der Einsatz speziell geformter Köpfe erleichtert.

Um den Luftwiderstand des drehenden Rotors zu verringern, ist es dabei von Vorteil, wenn die Köpfe der radialen Bolzen eine aerodynamisch günstige Form aufweisen, wobei insbesondere die Köpfe der radialen Bolzen auf der Oberseite abgerundet sind und zum Anziehen der Bolzen auf gegenüberliegenden Seiten zwei gerade Flanken aufweisen.

Erfindungsgemäß pressen mehrere in axialer Richtung hintereinander angeordnete radiale Bolzen jeweils eine gemeinsame, in axialer Richtung verlaufende Halteleiste von aussen gegen den Wickelkopf. Hierdurch wird eine vergleichmässigte Druckverteilung der angezogenen Bolzen auf den Wickelkopf erreicht, ohne dass durch separate Unterlegscheiben die Anzahl der eingesetzten Elemente wesentlich erhöht werden muss. Um auch in diesem Fall den Luftwiderstand gering zu halten, weisen die Halteleisten zur Verbesserung der Aerodynamik abgerundete Längskanten auf.

Eine weitere Ausgestaltung der Erfindung zeichnet sich dadurch aus, dass zur Befestigung der Bölzen am äusseren Umfang einer innerhalb des Wickelkopfes befindlichen axialen Verlängerung des Rotorjochs hammerförmige Aussparungen vorgesehen sind, in welche in axialer Richtung mit Gewindebohrungen versehene Gegenleisten zum Einschrauben der radialen Bolzen eingeschoben sind, wobei insbesondere die zu jeweils einer Halteleiste gehörenden radialen Bolzen in eine gemeinsame Gegenleiste eingeschraubt sind. Hierdurch wird nicht nur die Montage vereinfacht, sondern es wird auch die Anzahl der Bauteile klein gehalten.

Vorzugsweise sind weiterhin Mittel zur Sicherung der radialen Bolzen gegen ein Verdrehen vorgesehen, wobei insbesondere die radialen Bolzen jeweils am inneren Ende eine Ausnehmung mit einer rechteckigen Anlagefläche aufweisen, und die radialen Bolzen durch in die Aussparungen axial eingeschobene, an den Anlageflächen anliegende Sicherungsleisten gegen ein Verdrehen gesichert sind.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in radialer Richtung von aussen gesehen den Wickelkopf mit einer Rückhaltevorrichtung gemäss einem bevorzugten Ausführungsbeispiel der Erfindung;
- Fig. 2: einen vergrösserten Ausschnitt aus Fig. 1 mit den aerodynamisch geformten Köpfen der radialen Bolzen;
- Fig. 3: eine Draufsicht auf den Wickelkopf aus Fig. 1;
- Fig. 4: einen vergrösserten Ausschnitt aus Fig. 3 mit den Befestigungs - und Sicherungselementen für die radialen Bolzen; und
- Fig. 5: in zwei Teilfiguren 5(a) und 5(b) zwei unterschiedliche Ansichten eines radialen Bolzens, wie er in der Rückhaltevorrichtung der Fig. 1 zum Einsatz kommt.

### WEGE ZUR AUSFÜHRUNG DER ERFINDUNG

Die vorgeschlagene Lösung basiert auf der Idee, die Anzahl an Einzelteilen der Wickelkopf-Rückhaltevorrichtung zu reduzieren und gleichzeitig alle Teile mechanisch gegen ein Lösen durch Vibrationen zu sichern. Damit wird eine wesentliche Erhöhung der Sicherheit des Systems erreicht.

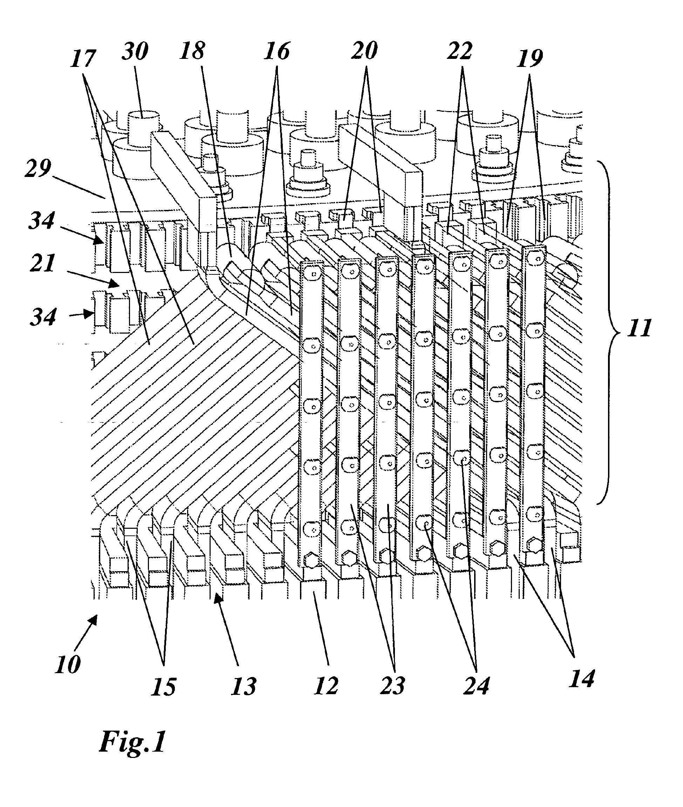

In Fig. 1 in radialer Richtung von aussen gesehen ist ein Ausschnitt eines Rotors 10 eines grossen Hydrogenerators/Motors mit einem Wickelkopf 11 dargestellt, der mit einer Rückhaltevorrichtung gemäss einem bevorzugten Ausführungsbeispiel der Erfindung ausgerüstet ist. Der grundsätzliche Aufbau des Rotors 10 kann der eingangs zitierten Druckschrift entnommen werden. Der Rotor 10 hat ein zylindrisches Rotorjoch 12 mit am äusseren Umfang verteilt angeordneten axialen Wicklungsnuten 13. In die Wicklungsnuten 13 sind (jeweils paarweise übereinander) Wicklungsstäbe 14, 15 der Rotorwicklung eingelegt. Die axial aus dem Rotorjoch 12 austretenden Wicklungsenden 16, 17 sind abgekröpft und nach einem vorgegebenen Wicklungs- bzw. Phasenschema untereinander an den Enden mittels Rundösen 18 elektrisch verbunden. Die Wicklungsenden 16, 17 sind Teil des Wickelkopfes 11.

Innerhalb des Wickelkopfes 11 erstreckt sich in axialer Richtung eine (zylindrische) axiale Verlängerung 21 des Rotorjochs 12, die stirnseitig durch eine Pressplatte 29 abgeschlossen wird, an der sich eine Vielzahl von axialen Spannbolzen 30 abstützt, die das Blechpaket des Rotorjochs 12 in axialer Richtung zusammenhalten. Am äusseren Umfang der Verlängerung 21 sind in axialer Richtüng hintereinander mehrere Radkränze 34 angeordnet, in denen über den Umfang gleichmässig verteilt hammerförmige Aussparungen 19 vorgesehen sind, die der Befestigung der erfindungsgemässen Rückhaltevorrichtung für den Wickelkopf 11 dienen. Die Rückhaltevorrichtung umfasst eine Vielzahl von radialen Bolzen 24.

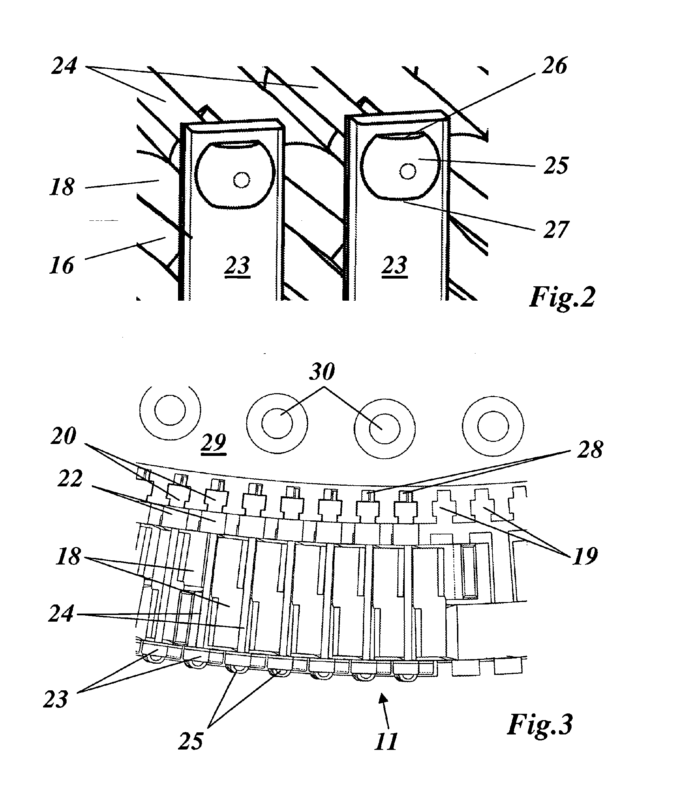

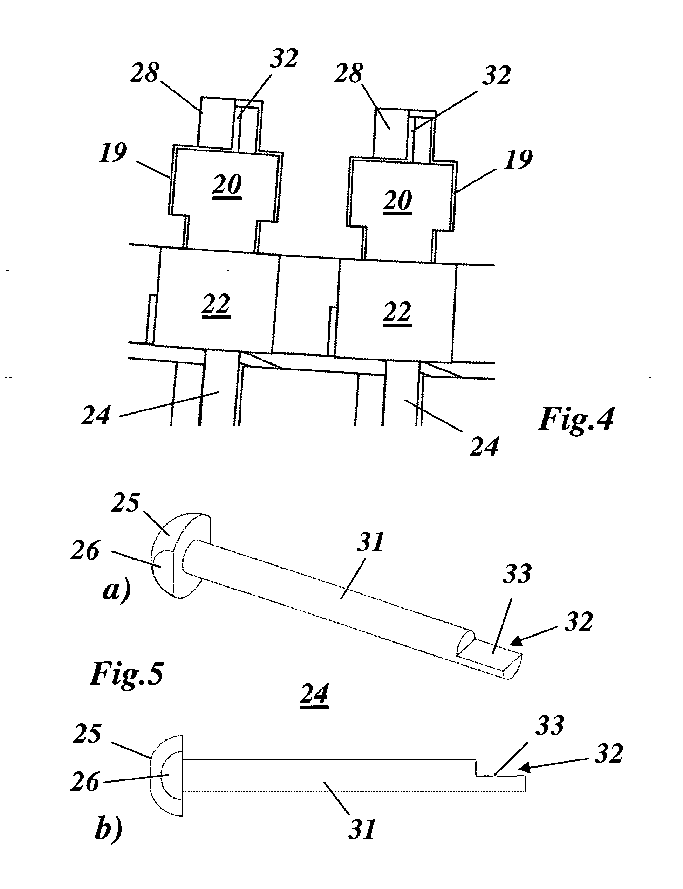

Wie aus Fig. 2 und 5 ersichtlich ist, werden radiale Bolzen 24 verwendet, die fest mit dem Schaft 31 verbundene Köpfe 25 aufweisen. Die feste Verbindung der Köpfe 25 mit den Bolzen 24 erfolgt bevorzugt stoffschlüssig, beispielsweise durch Schmieden oder Schweissen. So werden insbesondere Bolzen 24 mit angeschmiedeten oder fix verschweissten Köpfen 25 verwendet. Die Köpfe 25 weisen zwei gegenüberliegende gerade Flanken 26, 27 auf, die zum Anziehen der Bolzen 24 mit einem Gabelschlüssel oder dgl. dienen. Weiter werden anstelle von rechteckigen Unterlegscheiben axial verlaufende Halteleisten 23 eingesetzt, welche die Rückhaltekräfte der Bolzen 24 gleichmässig auf die Wicklung bzw. den Wickelkopf 11 verteilen.

Die Schraubenköpfe 25 wie auch die Halteleisten 23 zeichnen sich weiter durch ihre aerodynamische Form aus (runde Köpfe 25 und abgerundete Kanten der Halteleisten 23), was zu einer Reduktion der Reibungsverluste im Betrieb führt.

Die radialen Bolzen 24 verlaufen in radialer Richtung durch den Wickelkopf 11 und werden in den hammerförmigen Aussparungen 19 im axial erweiterten Rotorjoch (21) aufgenommen. Die Bolzen 24 werden mittels einer mit Gewindebohrungen versetzten Gegenleiste 20 zurückgehalten. Entsprechend der Halteleiste 23 auf der Vorderseite verläuft die Gegenleiste 20 über die Länge der Rotorjochverlängerung. Jeder Bolzen 24 kann somit individuell eingeschraubt und auf die nötige Spannung gebracht werden. Zwischen Wickelkopf 11 und der Verlängerung 21 des Rotorjochs 12 sind zusätzlich noch axiale Abstandskörper 22 angeordnet, durch welche die Bolzen 24 hindurchreichen.

Wie aus Fig. 5 ersichtlich ist, haben die ansonsten runden Bolzen 24 am freien Ende eine Ausnehmung 32 mit einer rechteckigen Anlagefläche 33. Dies hat den folgenden Grund: Die Bolzen 24 werden mittels geeigneter Werkzeuge auf die notwendige Spannung angezogen, so dass in der Endposition die geraden Flanken 26, 27 der Schraubenköpfe 25 quer zur Längsachse der Maschine stehen; wie dies in Fig. 1 und 2 dargestellt ist. In dieser Position verläuft die rechteckige Anlagefläche 33 der Enden der Bolzen 24 parallel zu den Flanken der hammerförmigen Aussparungen 19. Sobald nun alle Bolzen 24 einer Reihe (Halteleiste 23) angebracht sind, kann eine Sicherungsleiste 28 (Fig. 4) in die verbleibende Aussparung eingebracht werden. Dabei ist die Sicherungsleiste 28 so dimensioniert, dass sich die Bolzen 24 nicht mehr drehen lassen. Dieses Prinzip erlaubt auf einfache Weise das Sichern sämtlicher Teile der Rückhaltevorrichtung vor unvorhergesehener Lockerung der verschraubten Teile. Im Weiteren ist es auch möglich, auf dieselbe Weise die Bolzen 24 beidseitig mit einer eingeschobenen Leiste zu sichern, wenn die Enden der Bolzen entsprechend mit zwei parallelen Anlageflächen versehen sind. Schliesslich bestünde eine weitere Möglichkeit der Sicherung darin, die Bolzen 24 hinten mit Schlitzen zu versehen, durch welche zur Sicherung ein Metalldraht eingeführt werden kann.

### BEZUGSZEICHENLISTE

- 10: Rotor
- 11: Wickelkopf
- 12: Rotorjoch
- 13: Wicklungsnut
- 14,15: Wicklungsstab
- 16,17: Wicklungsende (gekröpft)
- 18: Rundöse
- 19: Aussparung
- 20: Gegenleiste
- 21: Verlängerung (Rotorjoch)
- 22: Abstandskörper
- 23: Halteleiste
- 24: Bolzen
- 25: Kopf (Bolzen)
- 26,27: Flanke
- 28: Sicherungsleiste
- 29: Pressplatte
- 30: Spannbolzen
- 31: Schaft
- 32: Ausnehmung
- 33: Anlagefläche
- 34: Radkranz

## Patentansprüche

1. Rotor (10) einer elektrischen Maschine, insbesondere eines Hydrogenerators, welcher Rotor (10) ein Rotorjoch (12) mit am äusseren Umfang verteilt angeordneten axialen Wicklungsnuten (13) umfasst, in die Wicklungsstäbe (14, 15) der Rotorwicklung eingelegt sind, deren axial aus dem Rotorjoch (12) austretenden Wicklungsenden (16, 17) einen Wickelkopf (11) bilden, welcher mittels einer eine Vielzahl von radialen Bolzen (24) umfassenden Rückhaltevorrichtung (19,..,28) gegen die angreifenden Fliehkräfte zurückgehalten wird, wobei die radialen Bolzen (24) fest mit dem Schaft (31) verbundene Köpfe (25) aufweisen,
**dadurch gekennzeichnet, dass** mehrere in axialer Richtung hintereinander angeordnete radiale Bolzen (24) ieweils eine gemeinsame, in axialer Richtung verlaufende Halteleiste (23) von aussen gegen den Wickelkopf (11) pressen.

2. Rotor nach Anspruch 1, **dadurch gekennzeichnet, dass** die Köpfe (25) der radialen Bolzen (24) mit dem Schaft (31) stoffschlüssig verbunden sind.

3. Rotor nach Anspruch 2, **dadurch gekennzeichnet, dass** die Köpfe (25) der radialen Bolzen (24) mit dem Schaft (31) verschweisst sind.

4. Rotor nach Anspruch 1 oder 2 oder 3, **dadurch gekennzeichnet, dass** die Köpfe (25) der radialen Bolzen (24) eine aerodynamisch günstige Form aufweisen.

5. Rotor nach Anspruch 4, **dadurch gekennzeichnet, dass** die Köpfe (25) der radialen Bolzen (24) auf der Oberseite abgerundet sind und zum Anziehen der Bolzen (24) auf gegenüberliegenden Seiten zwei gerade Flanken (26, 27) aufweisen.

6. Rotor nach Anspruch 1, **dadurch gekennzeichnet, dass** die Halteleisten (23) zur Verbesserung der Aerodynamik abgerundete Längskanten aufweisen.

7. Rotor nach einem der Ansprüche 1 bis 6, **dadurch gekennzeichnet, dass** zur Befestigung der Bolzen (24) am äusseren Umfang einer innerhalb des Wickelkopfes (11) befindlichen axialen Verlängerung (21) des Rotorjochs (12) hammerförmige Aussparungen (19) vorgesehen sind, in welche in axialer Richtung mit Gewindebohrungen versehene Gegenleisten (20) zum Einschrauben der radialen Bolzen (24) eingeschoben sind.

8. Rotor nach Anspruch 1 und 7, **dadurch gekennzeichnet, dass** die zu jeweils einer Halteleiste (23) gehörenden radialen Bolzen (24) in eine gemeinsame Gegenleiste (20) eingeschraubt sind.

9. Rotor nach Anspruch 7 oder 98, **dadurch gekennzeichnet, dass** Mittel (28, 32, 33) zur Sicherung der radialen Bolzen (24) gegen ein Verdrehen vorgesehen sind.

10. Rotor nach Anspruch 9, **dadurch gekennzeichnet, dass** die radialen Bolzen (24) jeweils am inneren Ende eine Ausnehmung (32) mit einer rechteckigen Anlagefläche (33) aufweisen, und dass die radialen Bolzen (24) durch in die Aussparungen (19) axial eingeschobene, an den Anlageflächen (33) anliegende Sicherungsleisten (28) gegen ein Verdrehen gesichert sind.

## Claims

1. A rotor (10) of an electric machine, especially of a hydrogenerator, which rotor (10) comprises a rotor yoke (12) with axial winding slots (13) which are arranged in a distributed manner on the outer periphery and into which winding bars (14, 15) of the rotor winding are inserted, the winding ends (16, 17) of which, which emerge axially from the rotor yoke (12), form an end winding (11) which is retained against the acting centrifugal forces by means of a retaining device (19,..., 28) which comprises a number of radial bolts (24), wherein the radial bolts (24) have heads (25) which are connected to the shank (31) in a fixed manner, **characterized in that** a plurality of radial bolts (24), which are arranged in series in the axial direction, in each case press a common retaining strip (23), which extends in the axial direction, against the end winding (11) from the outside.

2. The rotor as claimed in claim 1, **characterized in that** the heads (25) of the radial bolts (24) are connected to the shank (31) in a materially bonding manner.

3. The rotor as claimed in claim 2, **characterized in that** the heads (25) of the radial bolts (24) are welded to the shank (31).

4. The rotor as claimed in claim 1 or 2 or 3, **characterized in that** the heads (25) of the radial bolts (24) have an aerodynamically favorable shape.

5. The rotor as claimed in claim 4, **characterized in that** the heads (25) of the radial bolts (24) are rounded on the upper side and have two straight flanks (26, 27) on opposite sides for drawing up the bolts (24).

6. The rotor as claimed in claim 1, **characterized in that** the retaining strips (23) have rounded longitudinal edges for improving the aerodynamics.

7. The rotor as claimed in one of claims 1 to 6, **characterized in that** for fastening the bolts (24) on the outer periphery of an axial extension (21) of the rotor yoke (12), which extension is located inside the end winding (11), hammer-shaped recesses (19) are provided, into which counter strips (20), which in the axial direction are provided with threaded holes, are inserted for screwing in the radial bolts (24).

8. The rotor as claimed in claim 1 and 7, **characterized in that** the radial bolts (24) which are associated with a retaining strip (23) in each case are screwed into a common counter strip (20).

9. The rotor as claimed in claim 7 or 8, **characterized in that** means (28, 32, 33) are provided for locking the radial bolts (24) against rotation.

10. The rotor as claimed in claim 9, **characterized in that** the radial bolts (24), on the inner end in each case, have a recess (32) with a rectangular locating face (33), and **in that** the radial bolts (24) are locked against rotation by means of locking strips (28) which are axially inserted into the recesses (19) and abut against the locating faces (33).

## Revendications

1. Rotor (10) d'une machine électrique, en particulier d'un hydrogénérateur, lequel rotor (10) comprend une culasse de rotor (12) avec des rainures d'enroulement (13) axiales réparties sur la périphérie extérieure, dans lesquelles sont introduites les barres d'enroulement (14, 15) de l'enroulement rotorique, dont les extrémités d'enroulement (16, 17) sortant axialement de la culasse de rotor (12) forment une tête d'enroulement (11), qui est retenue au moyen d'un dispositif de retenue (19, .., 28) comprenant une pluralité de boulons radiaux (24) contre les forces centrifuge s'exerçant, le boulons radiaux (24) présentant des têtes (25) connectées fixement à la tige (31),
**caractérisé en ce que** plusieurs boulons radiaux (24) disposés les uns derrière les autres dans la direction axiale pressent à chaque fois une barrette de retenue (23) commune, s'étendant dans la direction axiale, depuis l'extérieur contre la tête d'enroulement (11).

2. Rotor selon la revendication 1, **caractérisé en ce que** les têtes (25) des boulons radiaux (24) sont connectées par engagement par liaison de matière avec la tige (31).

3. Rotor selon la revendication 2, **caractérisé en ce que** les têtes (25) des boulons radiaux (24) sont soudées à la tige (31).

4. Rotor selon la revendication 1 ou 2 ou 3, **caractérisé en ce que** les têtes (25) des boulons radiaux (24) présentent une forme favorable du point de vue aérodynamique.

5. Rotor selon la revendication 4, **caractérisé en ce que** les têtes (25) des boulons radiaux (24) sont arrondies sur le côté supérieur et présentent, pour visser les boulons (24), deux flancs droits (26, 27) sur des côtés opposés.

6. Rotor selon la revendication 1, **caractérisé en ce que** les barrettes de retenue (23) présentent des arêtes longitudinales arrondies pour améliorer l'aérodynamisme.

7. Rotor selon l'une quelconque des revendications 1 à 6, **caractérisé en ce que** pour la fixation des boulons (24) sur la périphérie extérieure d'un prolongement axial (21) de la culasse de rotor (12) se trouvant à l'intérieur de la tête d'enroulement (11), on prévoit des évidements (19) en forme de marteau dans lesquels sont enfoncées, dans la direction axiale, des barrettes conjuguées (20) munies d'alésages filetés pour le vissage des boulons radiaux (24).

8. Rotor selon les revendications 1 et 7, **caractérisé en ce que** les boulons radiaux (24) appartenant a chaque barrette de retenue (23) sont vissés dans une barrette conjuguée commune (20).

9. Rotor selon la revendication 7 ou 8, **caractérisé en ce que** des moyens (28, 32, 33) sont prévus pour fixer les boulons radiaux (24) contre toute rotation.

10. Rotor selon la revendication 9, **caractérisé en ce que** les boulons radiaux (24) présentent à chaque fois à l'extrémité intérieure un évidement (32) avec une surface d'appui rectangulaire (33) et **en ce que** les boulons radiaux (24) sont fixés contre toute rotation par des barrettes de fixation (28) s'appliquant sur les surfaces d'appui (33) et enfoncées axialement dans les évidements (19).
